# EUROPÄISCHE PATENTSCHRIFT

(11) **EP 1 507 997 B1**
(45) Veröffentlichungstag und Bekanntmachung des Hinweises auf die Patenterteilung: **05.10.2005**
(21) Anmeldenummer: 03740138.7
(22) Anmeldetag: 15.05.2003
(51) Int. Cl.: F16L 51/02, F16L 27/108

(54) **VORRICHTUNG ZUR KOMPENSATION VON LÄNGENÄNDERUNGEN IN EINEM ROHRSYSTEM**
DEVICE FOR COMPENSATING LENGTH CHANGES IN A PIPE SYSTEM
DISPOSITIF SERVANT A COMPENSER DES VARIATIONS DE LONGUEUR DANS UN SYSTEME DE CANALISATIONS

(30) Priorität: 29.05.2002 AT 34302 U
(43) Veröffentlichungstag der Anmeldung: 23.02.2005
(73) Patentinhaber: Poloplast GmbH & Co. KG, 4060 Leonding (AT)
(72) Erfinder: PAIER, Thomas, A-3352 St. Peter in der Au (AT)
(74) Vertreter: Hoefer, Theodor
(86) Internationale Anmeldenummer: PCT/EP2003/005122
(87) Internationale Veröffentlichungsnummer: WO 2003/100311

(56) Entgegenhaltungen:
- DE-C- 4 417 407
- GB-A- 1 386 774

## Beschreibung

Die Erfindung bezieht sich auf eine Vorrichtung zur Kompensation von Längenänderungen in einem Rohrsystem nach dem Oberbegriff des Hauptanspruchs. Eine solche Vorrichtung ist aus GB-A-1 386 774 bekannt.

Bei Rohrsystemen besteht generell das Problem, dass Temperaturänderungen des zu transportierenden Mediums zu thermischen Ausdehnungen oder Kontraktionen der Rohre führen. Gleiches gilt bei der Durchleitung von Medium durch ein Rohrsystem, falls das Rohrsystem eine andere Temperatur aufweist als das Medium.

Typische Anwendungsfälle der vorliegenden Erfindung sind Heißwasser- und Kaltwasserleitungen in Gebäuden sowie Ablaufleitungen.

Durch die thermischen Längenänderungen kann es zum einen zu Verformungen der Rohre kommen, zum anderen besteht die Gefahr, dass die Rohre eine unerwünschte Druckspannung bekommen, sodass sich die Rohre entweder ebenfalls verformen oder brechen bzw. reißen. In gleicher Weise werden Anschlusselemente, Fittinge oder Ähnliches sowie die entsprechenden Rohrverbindungen negativ beeinflusst.

Aus dem Stand der Technik ist es bekannt, bei Rohrleitungen Ausgleichsschlaufen oder Biegeschenkel vorzusehen. Dies führt zu erhöhten Herstellungskosten des Rohrsystems.

Andere Lösungen sehen aufwendige und damit auch kostenintensive Befestigungsmaßnahmen vor, bei denen sich die Rohrsysteme entsprechend verbiegen können. Alle diese Maßnahmen beseitigen nicht die zugrunde liegende Problematik und führen lediglich zu unvollständigen Lösungen.

Der Erfindung liegt die Aufgabe zugrunde, eine Vorrichtung zur Kompensation von Längenänderungen in einem Rohrsystem zu schaffen, welche bei einfachem Aufbau und einfacher, störungssicherer Funktionsweise die Nachteile des Standes der Technik vermeidet.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass die Vorrichtung ein elastisches Rohrelement umfasst, welches auf Zug vorgespannt und mittels einer lösbaren Sicherungseinrichtung gesichert ist, sowie mit einer der Vorspannung des Rohrelements gegenwirkenden Druckeinrichtung.

Das der Erfindung zugrunde liegende Prinzip besteht somit darin, ein elastisches Rohrelement auf Zug vorzuspannen. Dieses überträgt, wenn es in ein Rohrsystem eingebaut ist, somit die Zug-Vorspannung auf das gesamte Rohrsystem. Bei einer Erwärmung des elastischen Rohrelements dehnt sich dieses aus, wodurch die Zugspannung geringer wird. Da sich die Ausdehnung bzw. Kontraktion des Rohrelements in Abhängigkeit von der Dimensionierung und den gewählten Materialien nichtlinear verhält, ist erfindungsgemäß die Druckeinrichtung vorgesehen, welche in gewissem Maße die Zug-Vorspannung des Rohrelements kompensiert und somit einen gewünschten Druckverlauf der Gesamtvorrichtung sicherstellt.

Die erfindungsgemäß vorgesehene lösbare Sicherungseinrichtung gestattet es, die erfindungsgemäße Vorrichtung in ein Rohrsystem einzubauen. Nach dem Einbau in das Rohrsystem wird die Sicherungseinrichtung gelöst, sodass die Vorspannung des elastischen Rohrelements wirksam werden kann. Hierdurch vereinfacht sich der Einbau der Vorrichtung ganz erheblich, sie kann insbesondere auch von weniger geübten Fachleuten installiert werden, ohne dass diese besondere Maßnahmen zur Sicherstellung der geeigneten Vorspannung treffen müssten.

Die erfindungsgemäße Vorrichtung wird somit mit nicht-gelöster Sicherungseinrichtung in einer ersten, stationären Funktionsposition bereitgestellt. Diese Funktionsposition ist für die Installation der Vorrichtung vorgesehen. Nach erfolgtem Einbau und Lösen der Sicherungseinrichtung ergibt sich eine dynamische, zweite Funktionsposition, bei welcher die erfindungsgemäße Vorrichtung Längenänderungen eines Rohrsystems, die insbesondere thermisch bedingt sind, kompensieren kann.

Es versteht sich, dass die erfindungsgemäße Vorrichtung auch bei Rohrsystemen einsetzbar ist, die aus anderen Gründen Längenänderungen unterworfen sind. Hierbei ist keine thermische Ausdehnung bzw. Kontraktion des Rohrelements selbst erforderlich, vielmehr wirkt dieses in Zusammenhang mit dem gesamten Rohrsystem, in welches die Vorrichtung eingebaut ist.

In einer besonders vorteilhaften Ausgestaltung der Erfindung ist vorgesehen, dass die Vorspannung des Rohrelements auf Zug sowie die Druck-Vorspannung der Druckeinrichtung jeweils so gewählt sind, dass sich in der Summe ein im Wesentlichen linearer Federkraftverlauf in der Vorrichtung ergibt. Somit ist es beispielsweise möglich, eine gleichbleibende Zugspannung von 200 N in einem Rohrsystem mittels der erfindungsgemäßen Vorrichtung zu realisieren.

Besonders vorteilhaft erweist es sich, dass die erfindungsgemäße Vorrichtung durch die Kombination der Zug-Vorspannung des elastischen Rohrelements und die gegenwirkende Druckeinrichtung sehr kurz und kompakt gebaut werden kann.

Erfindungsgemäß kann die Druckeinrichtung bevorzugter Weise durch zumindest eine Feder gebildet werden. In einer alternativen Ausgestaltung der Erfindung ist es besonders günstig, wenn die Druckeinrichtung durch eine Torsionseinrichtung zur Torsion des Rohrelements selbst gebildet wird. In diesem Falle sind keine zusätzlichen Federelemente erforderlich, vielmehr kann die Elastizität des Rohrelements selbst für die gegenwirkende Druckeinrichtung verwendet werden. Dabei ist es günstig, wenn die Torsionseinrichtung zumindest einen an dem Rohrelement befestigten Mitnehmer umfasst, welcher sich mit zumindest einer Kurvenbahn eines Kulissenelements in Eingriff befindet. Durch diese Ausgestaltung kann die Torsion des Rohrelements gezielt gesteuert und beeinflusst werden.

Besonders günstig ist es, wenn das Kulissenelement in Form zweier zueinander teleskopischer, das Rohrelement umgebender Hülsen ausgebildet ist. Diese Hülsen sind bevorzugter Weise drehfest an der Vorrichtung gelagert. Bei Längenänderungen des elastischen Rohrelements können sich somit die beiden Hülsen relativ zueinander bewegen, wodurch die Mitnehmer mit den entsprechenden Bereichen der Kurvenbahnen in Kontakt kommen können.

In einer günstigen Ausgestaltung der Erfindung ist vorgesehen, dass das Rohrelement auf Torsion vorgespannt ist. Erfindungsgemäß ist es jedoch auch möglich, das Rohrelement selbst ohne Vorspannung einzubauen und die Vorspannung erst bei Längenänderungen und damit Änderungen der Zug-Vorspannung zu erzeugen.

Die erfindungsgemäße vorgesehene Sicherungseinrichtung kann bevorzugter Weise in Form einer die Vorrichtung zumindest teilweise umschließenden Sicherungshülse ausgebildet sein. Diese Sicherungshülse kann axial und/oder in Umfangsrichtung lösbar sein. Nach dem Einbau der Vorrichtung kann somit die Sicherungshülse verschoben oder verdreht werden (oder entsprechend gelöst werden). Hierdurch ist eine besonders einfache Betätigung der erfindungsgemäßen Vorrichtung sichergestellt, die auch durch ungeübte Installationshandwerker sicher durchgeführt werden kann.

Im Folgenden wird die Erfindung anhand von Ausführungsbeispielen in Verbindung mit der Zeichnung beschrieben. Dabei zeigt:
- Fig. 1: eine vereinfachte Schnittansicht eines ersten Ausführungsbeispiels der erfindungsgemäßen Vorrichtung,
- Fig. 2: ein Kraft-Weg-Diagramm zur Erläuterung der Wirkungsweise der erfindungsgemäßen Vorrichtung,
- Fig. 3: eine perspektivische, vereinfachte Darstellung eines weiteren Ausführungsbeispiels der erfindungsgemäßen Vorrichtung in teilweise montiertem Zustand,
- Fig. 4: eine Darstellung des mit dem Ausführungsbeispiel der Fig. 3 verwendeten Rohrelements,
- Fig. 5: eine Darstellung im teilmontierten Zustand,
- Fig. 6: eine perspektivische Darstellung des zweiten Ausführungsbeispiels, und
- Fig. 7: eine Längs-Schnittansicht der Anordnung gemäß Fig. 6.

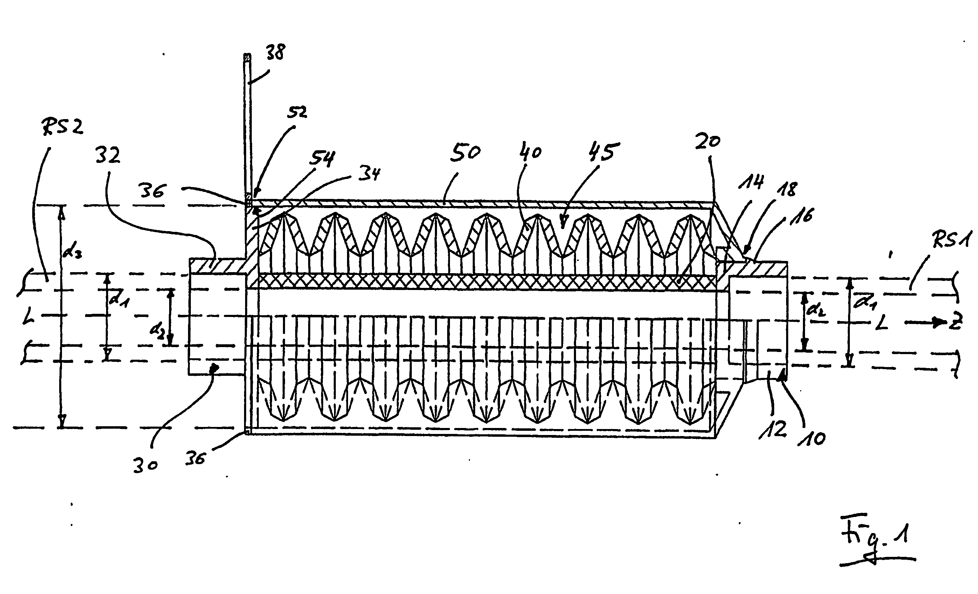

Die in der Fig. 1 schematisch im Schnitt dargestellte Einrichtung umfasst eine erste Muffe 10, die im Wesentlichen zylinderförmig gestaltet ist, und zwar mit einem zylinderförmigen Mantel 12, der an einem Ende (in der Figur links) nach innen verbreitert ist, unter Ausbildung einer Wand 14, die mittig eine Öffnung aufweist, die konzentrisch zur Längsachse L der Einrichtung verläuft und einen Durchmesser d2 aufweist. Der Innendurchmesser des zylinderförmigen Mantels 12 ist mit d1 angegeben.

Der Mantel 12 weist umfangsseitig eine im Schnitt dreieckförmige Verbreiterung (Auflaufschräge) 16 mit einem Hinterschnitt 18 auf der der Wand 14 zugewandten Seite auf.

An die Wand 14 schließt sich ein Rohrelement 20 aus einem Elastomer an, dessen Innendurchmesser etwa d2 entspricht und dessen Außendurchmesser ungefähr gleich d1 ist.

Am gegenüber liegenden Ende ist das Rohrelement 20 mit einer zweiten Muffe 30 verbunden. Die Konstruktion der Muffe 30 entspricht im Wesentlichen der der Muffe 10. Dies gilt insbesondere für den Zylindermantel 32 mit dem Innendurchmesser d1 und eine Wand 34 mit einer Öffnung des Durchmessers d2, wobei die Anordnung der Muffe 30 spiegelbildlich zur Muffe 10 ist.

Die Fig. 1 lässt erkennen, dass die Muffe 30 keine Auflaufschräge besitzt, die Wand 34 jedoch umfangsseitig (radial) über den Mantel 32 vorsteht, wobei der Außendurchmesser der Wand 34 mit d3 angegeben ist.

Die Muffen 10, 30 mit dem dazwischen angeordneten Rohrelement 20 bilden eine bauliche Einheit, auch wenn die Muffen 10, 30 aus Metall und das Rohrelement 20 aus einem Elastomer gebildet sind.

Zur weiteren Konfektionierung der erfindungsgemäßen Vorrichtung wird diese beispielsweise mit der Muffe 30 eingespannt. Danach wird die erste Muffe 10 mit Hilfe eines Spreizwerkzeugs, das sich von innen gegen den zylindrischen Mantel 12 verkrallt, von der Muffe 30 weggezogen (Pfeilrichtung Z), sodass das Rohrelement 20 unter Zugspannung gerät.

Anschließend werden hintereinander angeordnete Tellerfedern 40 und eine Kunststoffhülse 50, die eine Sicherungseinrichtung bildet, über die erste Muffe 10 in Richtung auf die zweite Muffe 30 aufgeschoben (aufgesteckt), und zwar unter gleichzeitiger Vorspannung der Tellerfedern 40, bis die Hülse 50 mit ihrer endseitigen Stirnfläche 52 gegen ein Stützelement 36 stößt, welches fest mit der Umfangsfläche der Wand 34 verbunden ist, wobei der der Stirnfläche 52 benachbarte innere Abschnitt 54 der Hülse 50 auf einem verbleibenden Abschnitt der Umfangsfläche der Wand 34 aufliegt.

Gegen Ende des Weges, entlang dem die Hülse 50 aufgeschoben wird, wird sie über die Auflaufschräge 16 der Muffe 10 geführt und weitet sich entsprechend ein geringes Stück auf, bis sie das Ende der Aufschräge 16 erreicht hat und im Bereich des Hinterschnitts 18 auf die Zylinderfläche des Mantels 12 bzw. der Wand 14 zurückfedert.

Bei dieser Position, die in der Fig. 1 dargestellt ist, ist die Hülse 50 ortsfest zwischen Stützelement 36 und Auflaufschräge 16 eingespannt. Die Druckfederelemente 40 befinden sich im Ringraum 45 zwischen Rohrelement 20 und Hülse 50 und stehen unter Druckspannung. Bei der Verwendung von Tellerfedern kann ein vollständiges Vorspannen vorteilhaft sein. Das Rohrelement 20 steht unter Zugspannung.

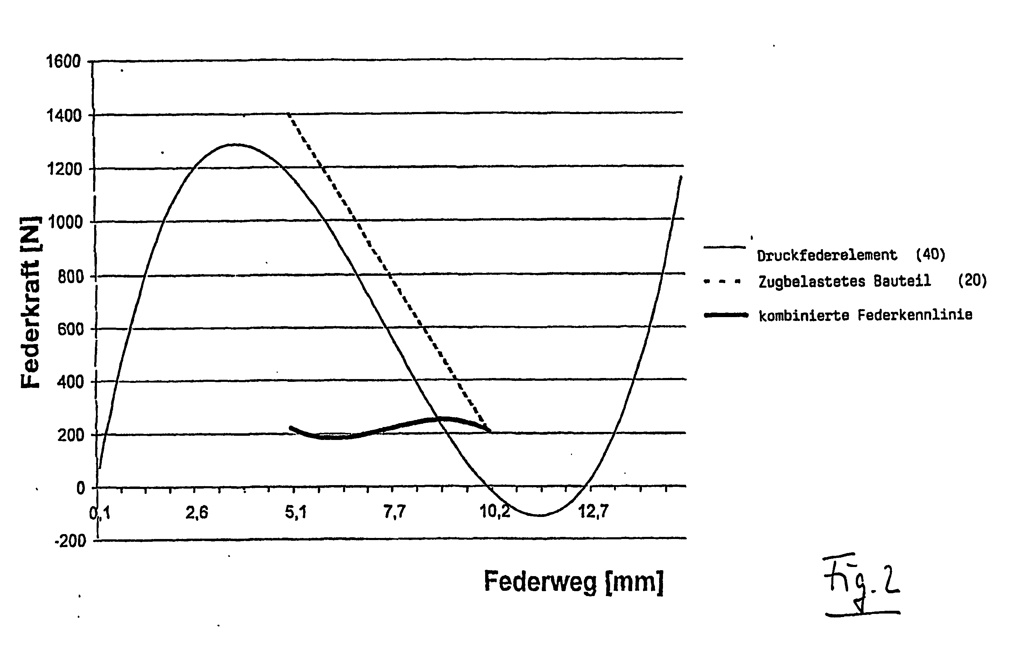

Von diesen vorgespannten Elementen hat das Rohrelement 20 die höhere Vorspannung. Die Tellerfedern 40 sind über einen oberen Scheitelpunkt ihrer Federkennlinie vorgespannt und befinden sich im Bereich eines degressiven Kraftverlaufs ihrer Federcharakteristik. D.h., mit zunehmendem Federweg nimmt die Kraft ab. Sie verbleibt unterhalb der Federkennlinie des Rohrelements 20. Aufgrund dieser Federkombination kommt es zu einem annähernd konstanten Kraftverlauf über den aufzunehmenden Weg, wie dem Diagramm der Fig. 2 zu entnehmen ist. Darin sind der Kraft-Weg-Verlauf jedes einzelnen Federelements 20, 40 und ihrer Kombination (gewellte Linie bei etwa 200 N +/- 25 N) dargestellt.

Die Hülse 50 verhindert beim Einbau der erfindungsgemäßen Vorrichtung ein vorzeitiges Zusammenziehen des Rohrelements 20 (bzw. der Muffen 10, 30) und ermöglicht einen spannungsfreien Einbau in ein Rohrleitungssystem, in dem entsprechende erste und zweite Rohrleitungsstücke RS 1, RS 2 mit den Muffen 10, 30 verbunden werden. Dies kann beispielsweise durch Verschweißen erfolgen.

Erst danach wird die erfindungsgemäße Vorrichtung "entsichert".

Dies geschieht durch ein Hilfsmittel, nämlich einen Ring 38, der an dem Stützelement 36 befestigt ist, welches selbst über eine (nicht dargestellte) Sollbruchstelle mit der Wand 34 verbunden ist.

Durch mechanische Betätigung des Rings 38 wird das Stützelement 36 abgerissen, sodass die Widerlagerfunktion des Stützelements 36 für die Hülse 50 entfällt und diese (in der Fig. 1 nach links) über die Wand 34 hinweggleiten kann.

Die Länge des Verschiebeweges der Hülse 50 hängt vom Grad der Vorspannung des Rohrelements 20 und der Tellerfedern 40 sowie deren Abstimmung aufeinander ab.

Im Ergebnis soll im Funktionszustand eine Konfiguration erreicht werden, bei der das Rohrelement 20 über alle zu erwartenden aufzunehmenden Längenänderungen des Rohrsystems gleicher Vorspannung (Zugspannung) verbleibt.

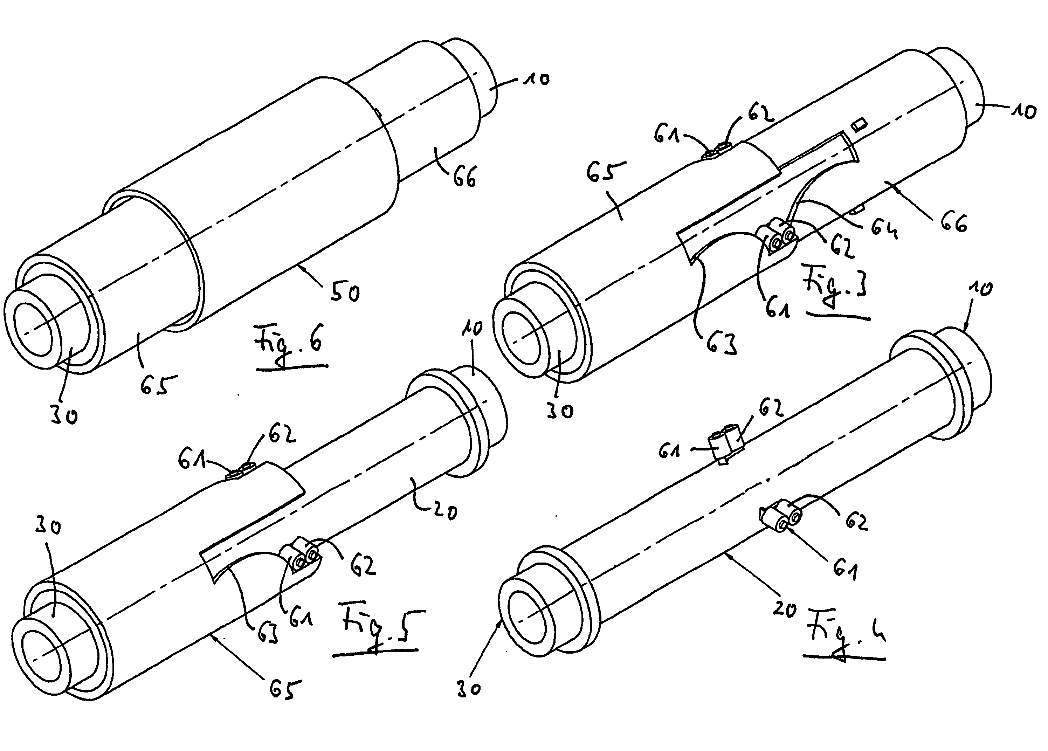

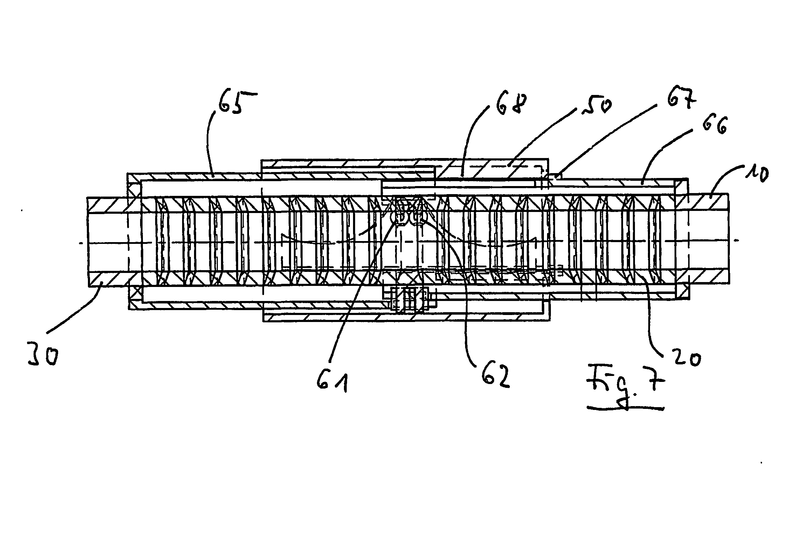

Die Fig. 3 bis 7 zeigen ein zweites Ausführungsbeispiel der Erfindung. Es sind jeweils gleiche Teile mit gleichen Bezugsziffern versehen.

Bei dem zweiten Ausführungsbeispiel ist ein elastisches Rohrelement 20 mit einer ersten Muffe 10 sowie einer zweiten Muffe 30 verbunden. Das Verbinden des Rohrelements 20 kann beispielsweise durch Spritzgießen von Polymer erfolgen, die Muffen 10 und 30 können aus Kunststoff oder aus Metall hergestellt sein. Im mittleren Bereich des Rohrelements 20 sind Mitnehmer 61, 62 an dem Rohrelement 20 befestigt. Diese können in Form von Rollen ausgebildet sein, die um entsprechende, im Einzelnen nicht mit Bezugszeichen versehene Zapfen drehbar sind, die wiederum an dem Rohrelement 20 befestigt sind. Bei dem gezeigten Ausführungsbeispiel sind jeweils zwei Mitnehmer 61, 62 nebeneinander angeordnet. Um den Umfang sind drei derartige Anordnungen von Mitnehmern 61, 62 vorgesehen.

Auf das Rohrelement 20 sind zwei Kulissenelemente 65, 66 aufgesetzt, die jeweils mit einer Kurvenbahn 63 bzw. 64 versehen sind. Die Fig. 5 zeigt einen Zustand, bei welchem lediglich ein Kulissenelement 65 montiert ist. Dieses stützt sich gegen die zweite Muffe 30 ab und ist zu dieser drehfest. Es ist ersichtlich, dass die Mitnehmer 61, 62 (Rollen) auf einem axialen Teilbereich der Kurvenbahn 63 aufliegen. Dies stellt bei dem gezeigten Ausführungsbeispiel den Ausgangszustand dar.

Das Kulissenelement 65, welches hülsenartig oder rohrartig ausgebildet ist, weist zu dem Rohrelement 20 einen radialen Abstand auf, sodass ein zweites Kulissenelement 66 zwischen das Rohrelement 20 und das Kulissenelement 65 teleskopisch einschiebbar ist (siehe Fig. 3). Das zweite Kulissenelement 66 ist entsprechend symmetrisch aufgebaut. die beiden Kulissenelemente 65 und 66 sind somit in Axialrichtung zueinander verschiebbar. Diese Verschiebebewegung wird durch einen Verkürzung des Rohrelements 20 hervorgerufen.

Wie insbesondere aus den Fig. 6 und 7 ersichtlich ist, wird der mittlere Bereich des Rohrelements 20 von einer Sicherungseinrichtung 50 umgriffen, die rohrförmig ausgebildet ist. Die Sicherungseinrichtung 50 stützt sich im statischen, gesicherten Zustand gegen eine Nase 67 des zweiten Kulissenelements 66 ab und liegt mit einem verdickten Bereich 68 gegen das freie Ende des ersten Kulissenelements 65 an. Die beiden Kulissenelemente 65, 66 können sich somit nicht in Axialrichtung teleskopisch zueinander verschieben. Dem Ausführungsbeispiel sind sowohl die Nase 67 als auch der verdickte Bereich 68 jeweils nicht über den gesamten Umfang ausgebildet, sodass eine Verdrehung der Sicherungseinrichtung 50 zu einer entsprechenden Freigabe führt, wodurch der dynamische Einbauzustand der erfindungsgemäßen Vorrichtung erzielt wird. Aus der Darstellung der Fig. 7 ist ersichtlich, dass durch die Montage der Sicherungseinrichtung 50 (Rohrhülse) das Rohrelement 20 auf Zug vorgespannt und gedehnt werden kann. Nach Freigabe bzw. Entsicherung der Sicherungseinrichtung 50 versucht somit das Rohrelement 20 sich zu kontrahieren und bringt hierdurch eine Zugspannung auf das gesamte Rohrsystem auf, in welches die erfindungsgemäße Vorrichtung eingebaut ist.

Das zweite Ausführungsbeispiel stellt somit im Wesentlichen ein ungleichförmig übersetztes Getriebe dar, nämlich ein dreigliedriges Kurvengetriebe mit Zwangslaufsicherung, wobei der innere Teil (Rohrelement 20) in einfacher Art als Feder wirkt und die Rollen der Mitnehmer 61, 62 über die Kurvenbahnen 63, 64 abrollen. Somit wird die Kraftübertragung mit dem Ziel einer gleichmäßigen Vorspannung erreicht.

Aus der Darstellung des zweiten Ausführungsbeispiels ergibt sich, dass die Mitnehmer 61, 62 sich bei einer teleskopischen Bewegung der beiden Kulissenelemente 65, 66 in Axialrichtung zueinander auf den Kurvenbahnen 63 und 64 bewegen müssen. Dies führt zu einer Torsion des mittleren Bereichs des Rohrelements 20. Falls dieses durch Torsion vorgespannt ist, wird eine Entspannung erreicht. Falls das Rohrelement 20 nicht auf Torsion vorgespannt ist, wird dieses durch die oben beschriebene Abrollbewegung auf Torsion gespannt. Hierdurch wird die gleiche Wirkung hervorgerufen, wie durch die Tellerfedern des ersten Ausführungsbeispiels.

Erfindungsgemäß ergibt sich somit ein linearer Federkraftverlauf der Gesamtvorrichtung, welcher dazu führt, dass eine kontinuierliche Kraft auf ein Rohrsystem aufgebracht werden kann.

Im Rahmen der Erfindung sind unterschiedliche Werkstoffauswahlen möglich. Die einzelnen Bauelemente können entweder vollständig aus Kunststoff gefertigt sein. Es sind jedoch auch Mischbauweisen aus Kunststoff und Metall möglich.

Das erfindungsgemäße Rohrelement 20 kann bei Anwendungen mit einem großen Innendruck verstärkt oder armiert werden, um eine radiale Aufweitung zu vermeiden. Es sind auch mechanische Stützelemente einsetzbar, beispielsweise in Form von Scheiben, die auf dem Rohrelement 20 aufsitzen und beispielsweise zwischen den Tellerfedern 40 liegen.

Das Rohrelement 20 kann aus einem thermoplastischen Elastomer gebildet werden, wobei eine reversible Verformbarkeit und eine hohe Zugbelastbarkeit vorteilhaft sind.

Bei dem ersten Ausführungsbeispiel versteht sich, dass anstelle der Tellerfedern auch andere Druckfedersysteme, beispielsweise stauchbare Hülsen oder Spiralfedern eingesetzt werden können.

Bei dem ersten Ausführungsbeispiel kann weiterhin die Sicherungseinrichtung 50 auch auf andere Weise entsicherbar sein, beispielsweise durch abnehmbare Sperrstifte oder Ähnliches.

Die Verbindung des Rohrelements 20 mit den Muffen 10, 30 kann einstückig oder auf andere Weise erfolgen. Es ist möglich, die Teile durch Schweißen oder Einspritzen zu verbinden.

### Bezugszeichenliste

- 10: Erste Muffe
- 12: Mantel
- 14: Wand
- 16: Auflaufschräge
- 18: Hinterschnitt
- 20: Rohrelement
- 30: Zweite Muffe
- 32: Mantel
- 34: Wand
- 36: Stützelement
- 38: Ring
- 40: Feder
- 45: Ringraum
- 50: Sicherungseinrichtung
- 52: Stirnfläche
- 54: Innerer Abschnitt
- 61: Mitnehmer
- 62: Mitnehmer
- 63: Kurvenbahn
- 64: Kurvenbahn
- 65: Kulissenelement
- 66: Kulissenelement
- 67: Nase
- 68: Verdickter Bereich

## Patentansprüche

1. Vorrichtung zur Kompensation von Längenänderungen in einem Rohrsystem, mit einem elastischen Rohrelement (20), welches auf Zug vorgespannt und mittels einer lösbaren Sicherungseinrichtung (50) gesichert ist, **gekennzeichnet durch** eine der Vorspannung des Rohrelements (20) gegenwirkende Druckeinrichtung.

2. Vorrichtung nach Anspruch 1, **dadurch gekennzeichnet, dass** die Vorspannung des Rohrelements (20) auf Zug sowie die Druck-Vorspannung der Druckeinrichtung jeweils so gewählt sind, dass sich in der Summe ein im Wesentlichen linearer Federkraftverlauf in der Vorrichtung ergibt.

3. Vorrichtung nach Anspruch 1 oder 2, **dadurch gekennzeichnet, dass** die Druckeinrichtung durch zumindest eine Feder (40) gebildet wird.

4. Vorrichtung nach einem der Ansprüche 1 bis 3, **dadurch gekennzeichnet, dass** die Druckeinrichtung durch eine Torsionseinrichtung zur Torsion des Rohrelements (20) gebildet wird.

5. Vorrichtung nach Anspruch 4, **dadurch gekennzeichnet, dass** die Torsionseinrichtung zumindest einen an dem Rohrelement (20) befestigten Mitnehmer (61, 62) umfasst, welcher sich mit zumindest einer Kurvenbahn (63, 64) eines Kulissenelements (65, 66) im Eingriff befindet.

6. Vorrichtung nach Anspruch 5, **dadurch gekennzeichnet, dass** das Kulissenelement (65, 66) in Form zweier zueinander teleskopischer, das Rohrelement (20) umgebender Hülsen (65, 66) ausgebildet ist.

7. Vorrichtung nach Anspruch 6, **dadurch gekennzeichnet, dass** die Hülsen (65, 66) drehfest an der Vorrichtung gelagert sind.

8. Vorrichtung nach einem der Ansprüche 4 bis 7, **dadurch gekennzeichnet, dass** das Rohrelement (20) auf Torsion vorgespannt ist.

9. Vorrichtung nach einem der Ansprüche 1 bis 8, **dadurch gekennzeichnet, dass** die Sicherungseinrichtung in Form einer die Vorrichtung zumindest teilweise umschließenden Sicherungshülse (50) ausgebildet ist.

10. Vorrichtung nach Anspruch 9, **dadurch gekennzeichnet, dass** die Sicherungshülse (50) axial und/oder in Umfangsrichtung lösbar ist.

## Claims

1. Device for compensating for length changes in a pipe system, having an elastic pipe element (20) which is prestressed in tension and is secured by means of a releasable securing device (50), **characterized by** a compression device counteracting the prestress of the pipe element (20).

2. Device according to Claim 1, **characterized in that** the prestress of the pipe element (20) in tension and the compressive prestress of the compression device are in each case selected such that the sum is a substantially linear course of the spring force in the device.

3. Device according to Claim 1 or 2, **characterized in that** the compression device is formed by at least one spring (40).

4. Device according to one of Claims 1 to 3, **characterized in that** the compression device is formed by a torsion device for the torsion of the pipe element (20).

5. Device according to Claim 4, **characterized in that** the torsion device comprises at least one dog (61, 62) which is fixed to the pipe element (20) and which is engaged in at least one curved track (63, 64) of a slotted guide element (65, 66).

6. Device according to Claim 5, **characterized in that** the slotted guide element (65, 66) is constructed in the form of two sleeves (65, 66) which can be telescoped into each other and surround the pipe element (20).

7. Device according to Claim 6, **characterized in that** the sleeves (65, 66) are fixed to the device so as to be fixed against rotation.

8. Device according to one of Claims 4 to 7, **characterized in that** the pipe element (20) is prestressed in torsion.

9. Device according to one of Claims 1 to 8, **characterized in that** the securing device is constructed in the form of a securing sleeve (50) at least partly enclosing the device.

10. Device according to Claim 9, **characterized in that** the securing sleeve (50) can be released axially and/or in the circumferential direction.

## Revendications

1. Dispositif servant à compenser des variations de longueur dans un système de canalisations, comprenant un élément tubulaire (20) élastique qui est précontraint en traction et qui est bloqué au moyen d'un dispositif de blocage (50) déverrouillable, **caractérisé par** un dispositif de pression agissant à l'encontre de la précontrainte de l'élément tubulaire (20).

2. Dispositif selon la revendication 1, **caractérisé en ce que** la précontrainte en traction de l'élément tubulaire (20), ainsi que la précontrainte en pression du dispositif de pression sont chacune sélectionnées de telle sorte que leur somme donne une courbe d'élasticité sensiblement linéaire dans le dispositif.

3. Dispositif selon la revendication 1 ou 2, **caractérisé en ce que** le dispositif de pression est constitué par au moins un ressort (40).

4. Dispositif selon l'une des revendications 1 à 3, **caractérisé en ce que** le dispositif de pression est constitué par un dispositif de torsion destiné à exercer une torsion sur l'élément tubulaire (20).

5. Dispositif selon la revendication 4, **caractérisé en ce que** le dispositif de torsion comprend au moins un toc d'entraînement (61, 62) monté sur l'élément tubulaire (20), qui coopère avec au moins une piste incurvée (63, 64) d'un élément coulissant (65, 66).

6. Dispositif selon la revendication 5, **caractérisé en ce que** l'élément coulissant (65, 66) se présente sous la forme de deux manchons (65, 66) téléscopiques l'un par rapport à l'autre, entourant l'élément tubulaire (20).

7. Dispositif selon la revendication 6, **caractérisé en ce que** les manchons (65, 66) sont montés sur le dispositif sans possibilité de rotation.

8. Dispositif selon l'une des revendications 4 à 7, **caractérisé en ce que** l'élément tubulaire (20) est précontraint en torsion.

9. Dispositif selon l'une des revendications 1 à 8, **caractérisé en ce que** le dispositif de blocage se présente sous la forme d'un manchon de blocage (50) entourant, au moins partiellement, le dispositif.

10. Dispositif selon la revendication 9, **caractérisé en ce que** le manchon de blocage (50) est déverrouillable axialement et/ou dans la direction de la circonférence.
